# NEUE EUROPÄISCHE PATENTSCHRIFT

(11) **EP 0 789 742 B2**
(45) Veröffentlichungstag und Bekanntmachung des Hinweises auf die Entscheidung über den Einspruch: **14.04.2010**
(45) Hinweis auf die Patenterteilung: 16.12.1998
(21) Anmeldenummer: 95936560.2
(22) Anmeldetag: 27.10.1995
(51) Int. Cl.: C11D 1/835, C11D 3/20, C11D 3/04, C11D 1/62

(54) **WÄSCHENACHBEHANDLUNGSMITTEL**
AFTERTREATMENT AGENT FOR LAUNDRY
AGENT DE POST-TRAITEMENT POUR LE LINGE

(30) Priorität: 05.11.1994 DE 4439570
(43) Veröffentlichungstag der Anmeldung: 20.08.1997
(73) Patentinhaber: Ecolab GmbH & Co. OHG, 40589 Düsseldorf (DE)
(72) Erfinder: WILSCH-IRRGANG, Anneliese, D-45549 Sprockhövel (DE); VÖLKEL, Theodor, D-40699 Erkrath (DE); MERZ, Thomas, D-40723 Hilden (DE)
(74) Vertreter: von Kreisler Selting Werner
(86) Internationale Anmeldenummer: PCT/EP1995/004224
(87) Internationale Veröffentlichungsnummer: WO 1996/014375

(56) Entgegenhaltungen:
- EP-A- 0 404 471
- EP-A- 0 643 128
- DE-A- 1 922 047
- DE-C- 2 943 606

## Beschreibung

Die Erfindung betrifft Zusammensetzungen zur Nachbehandlung gewaschener Wäsche in Form einer wäßrigen Zubereitung stabil dispergierter oder klar solubilisierter Textilweichmacherverbindungen und weiterer Hilfsmittel zur Verbesserung der textilhygienischen und deodorierenden Eigenschaften.

Wäschenachspülmittel dienen hauptsächlich dazu, der gewaschenen Wäsche einen weichen, fülligen Griff zu verleihen und die sogenannte Trockenstarre zu vermeiden. Hierzu werden üblicherweise quartäre Ammoniumverbindungen mit zwei oder drei langkettigen Alkyl-, Alkenyl- oder Acyloxyethylgruppen in Form wäßriger Dispersionen eingesetzt. Es ist auch bekannt, solche Zubereitungen antimikrobiell auszurüsten und hierzu wasserlösliche quartäre Ammoniumverbindungen mit zwei kurzen und zwei mittellangen Alkylgruppen, z.B. das Didecyldimethyl-ammoniumchlorid zu verwenden (vgl. Soap & Chem. Spec., März 1969, 47 - 52, 86).

Dabei treten jedoch erhebliche Stabilitätsprobleme auf. Gemäß DE 25 03 026 A1 wurde vorgeschlagen, ein Gemisch aus quartären Ammoniumsalzen und Dialkylimidazoliniumsalzen als Weichmacher und Fettalkohole, niedere Alkohole und Emulgatoren zur Stabilisierung der Dispersionen einzusetzen. DE 1922 047 A beschreibt die Stabilisierung von quartären Ammoniumverbindungen durch Fettsäure-Hydroxypolyamin-Kondensationsprodukte. Es ist auch bereits vorgeschlagen worden, Wäscheweichspülmittel auf saure pH-Werte einzustellen, um alkalische Waschmittelrückstände auf den Textilien zu neutralisieren und ihre Ausspülung zu erleichtern.

Es war schließlich bekannt, daß Pine-Oil sowie andere Holzöl-Destillate und deren terpenartige Komponenten eine deodorierende und leicht keimhemmende Wirkung aufweisen.

Die vorliegende Erfindung ging von der Aufgabe aus, einem Wäschenachbehandlungsmittel in Form einer wäßrigen Zubereitung bekannter Textilweichmacherverbindungen verbesserte textilhygienische, deodorierende und absäuernde Eigenschaften ohne Störung der Lagerstabilität und der rheologischen Eigenschaften durch eine entsprechende Rezepturgestaltung zu verleihen.

Dabei wurde gefunden, daß durch geeignete Rezepturgestaltung stabil dispergierte oder sogar klar solubilisierte Zubereitungen aus wasserunlöslichen und wasserlöslichen quartären Ammoniumverbindungen, und gegebenenfalls Terpenverbindungen, auch in Gegenwart von Säuren, erhalten werden.

Gegenstand der Erfindung ist daher eine Zusammensetzung zur Nachbehandlung gewaschener Wäsche in Form einer wäßrigen Zubereitung mit einem Gehalt von
(A) 0,1 - 30 Gew.-% einer wasserunlöslichen quartären Ammoniumverbindung der Formel I 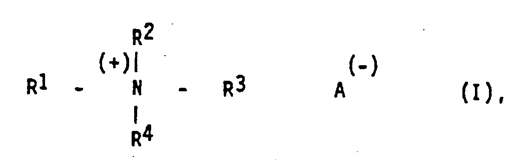 in der R¹ und R² Alkylgruppen mit 16 - 22 C-Atomen oder Gruppen der Formel R⁵CO (XCₙH₂ₙ)ₐ sind, worin R⁵CO eine lineare Acylgruppe mit 16 - 22 C-Atomen, X = Sauerstoff oder - NH -, n = 2 oder 3, a = 1 bis 4 ist, R³ eine Gruppe gemäß R¹ oder R² oder eine Alkylgruppe mit 1 - 4 C-Atomen und R⁴ eine Alkylgruppe mit 1 - 4 C-Atomen oder eine Hydroxyalkylgruppe mit 2 - 4 C-Atomen und A(-) ein Halogenid- oder Methoxysulfat-Anion ist,
(B) 0,1 - 50 Gew.-% einer wasserlöslichen quartären Ammoniumverbindung der Formel II 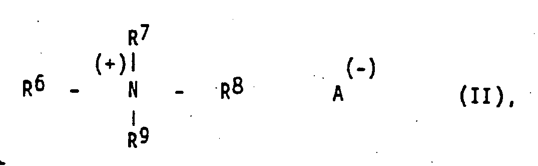 in der R⁶ und R⁷ eine Alkylgruppe mit 6 - 12 C-Atomen, R⁸ und R⁹ Alkylgruppen mit 1 - 4 C-Atomen oder Hydroxyalkylgruppen mit 2-4 C-Atomen und A(-) ein Halogenid- oder Methoxysulfat-Anion ist,
(C) 0 - 5 Gew.-% einer Terpenverbindung oder eines solche Verbindungen enthaltenden Holzöldestillats
(D) 0,1 - 20 Gew.-% einer wasserlöslichen anorganischen Säure oder organischen Carbonsäure oder Hydroxycarbonsäure mit 1 - 6 C-Atomen zur Einstellung eines pH-Wertes der Zubereitung von 1,0 bis 4,0, wobei der pH-Wert bei Verdünnung im Verhältnis 1 : 1000 unter 5 liegt, und
(E) 0,1 - 20 Gew.-% eines Emulgators vom Typ der Ethylenoxid-Anlagerungsprodukte mit einem HLB-Wert von 12 bis 19
enthält.

Als wasserunlöslich werden dabei solche quartären Ammoniumverbindungen (A) verstanden, die in reinem Wasser bei 20°C in einer Konzentration von 0,1 Gew.-% nicht klar gelöst sind.

Als wasserlösliche quartäre Ammoniumverbindungen (B) sollen solche verstanden werden, die in reinem Wasser bei 20°C in einer Konzentration von 1 Gew.-% klar gelöst sind.

Die erfindungsgemäßen Zusammensetzungen weisen eine niedrige Konsistenz und eine leichte Vermischbarkeit mit Wasser auf. Durch Wahl der bevorzugten Mengenverhältnisse der Komponenten A bis E und der bevorzugten Strukturen lassen sich die Zubereitungen als transparente bis völlig klare Solubilisate erhalten. Hierzu werden die folgenden näheren Angaben gemacht:

Als wasserunlösliche kationische Textilweichmacherverbindungen (A) eignen sich alle hierfür bekannten quartären Ammoniumverbindungen (QAV) der Formel I mit wenigstens zwei langkettigen Alkyl-, Alkenyl-oder Acylgruppen. Beispiele solcher Verbindungen sind z.B. das Distearyl-dimethyl-ammonium-chlorid oder das Di-stearamidoethyl-hydroxyethyl-methyl-ammoniumchlorid. Besonders bevorzugt sind erfindungsgemäße Textilweichmacher-Zusammensetzungen, die als QAV eine Verbindung der Formel I enthalten, in der R¹ und R² Acyloxyalkylgruppen der Formel R⁵CO(OCₙH₂ₙ)ₐ- sind, worin R⁵CO eine lineare Acylgruppe mit 16 - 18 C-Atomen, n = 2 oder 3 und a = 1 - 4 ist, R³ eine Gruppe gemäß R¹ oder R² oder eine Alkylgruppe mit 1 - 4 C-Atomen und R⁴ eine Alkylgruppe mit 1 - 4 C-Atomen oder eine Hydroxyalkylgruppe mit 2 - 4 C-Atomen und A(-) ein Halogenid- oder Methoxysulfat-Anion ist.

Solche bevorzugten sogenannten Esterquats sind nicht nur besser biologisch abbaubar, sondern lassen sich auch leichter zu den gewünschten stabilen Dispersionen oder Solubilisaten verarbeiten.

Besonders geeignete Verbindungen der Formel I, bei welchen R¹ und R2 Acyloxyethylgruppen der Formel R⁵CO(OC₂H₄)₂- sind und worin R⁵CO eine Oleoylgruppe oder eine von einer mehr als 50 Gew.-% Ölsäure enthaltenden Talg- oder Palmöl-fettsäure abgeleitete Acylgruppe ist, werden unter dem Warenzeichen Stepantex^{(R)} VS 90 bzw. Stepantex(R)D0 90 vertrieben.

Als wasserlösliche quartäre Ammoniumverbindungen (B) sind besonders solche Verbindungen der Formel II bevorzugt, in denen R⁶ und R⁷ Alkylgruppen mit 8 oder 10 C-Atomen, sind. Eine besonders geeignete Verbindung ist das Didecyl-dimethyl-ammoniumchlorid, das unter dem Warenzeichen Bardac^{(R)}22 oder Bardac^{(R)}2270E (70 %ig in Ethylenglycol) im Handel erhältlich ist.

Als Terpenverbindungen (C) eignen sich Terpenkohlenwasserstoffe, Ketone, Ether, Terpenalkohole oder Holzöldestillate, die solche Terpenverbindungen in größeren Mengen enthalten. Bevorzugt geeignet sind Terpenalkohole wie z.B. α- und ß-Terpineol, Dihydro-α-terpineol, α-Fenchylalkohol, Borneol, Isoborneol, α-Fenchol und das an diesen Verbindungen besonders reiche Pine-Oil, welches durch Extraktion aus Wurzelholz verschiedener Nadelhölzer und Destillation als niedrigsiedende Fraktion erhalten wird. Auch andere Terpenverbindungen, z.B. Menthol, Campher, Fenchon oder Pinene sind geeignet. Bevorzugt ist die Verwendung des Pine-Oils.

Als wasserlösliche Säuren (D) eignen sich z.B. Phosphorsäure, Schwefelsäure, Salzsäure oder Gemische solcher Mineralsäuren. Bevorzugt ist jedoch der Einsatz organischer Carbonsäuren mit 1 - 4 C-Atomen oder Hydroxycarbonsäuren mit 2 - 6 C-Atomen wie z.B. Ameisensäure, Essigsäure, Glycolsäure, Milchsäure, Citronensäure, Weinsäure, Äpfelsäure, Oxalsäure, Maleinsäure, Fumarsäure und Bernsteinsäure.

Als Emulgator (E) eignen sich alle oberflächenaktiven Anlagerungsprodukte des Ethylenoxids an Hydroxylgruppen tragende Fettstoffe, z.B. an Fettalkohole, an Fettamine, an Fettsäuren, an Fettsäuremono-und Diglyceride, an Sorbitanfettsäureester, an Alkandiole und an Alkandiol-monoglycolether, die einen HLB-Wert von 12 bis 19 aufweisen. Der HLB-Wert soll dabei ein Maß für die Hydrophilie sein und z.B. nach der Beziehung HLB = (100-L)/5 berechenbar sein, wobei L der Gehalt an lipophilen Alkyl- oder Acylgruppen in Gew.-% des Ethylenoxid-Addukts ist.

Besonders geeignete Emulgatoren sind dabei die Anlagerungsprodukte von 5 - 25 Mol Ethylenoxid an Addukte von Ethylenglycol an lineare, 1,2-Epoxyalkane mit 10 - 16 C-Atomen. Die Ringöffnung von endständigen Epoxyalkanen mit Ethylenglycol führt zu Alkandiol-(1,2)-monoglycolethern, die mit Ethylenoxid zu Alkandiol-(1,2)-polyglycolethern weiter umgesetzt werden können. Diese Alkandiol-(1,2)-polyglycolether sind besonders bevorzugte Emulgatoren zur Ausführung der vorliegenden Erfindung, da sie besonders zur Herstellung transparenter oder klar solubilisierter Rezepturen der erfindungsgemäßen Zusammensetzung geeignet sind.

Der Gehalt an Textilweichmacherverbindungen (A) vom Typ der quartären Ammoniumverbindungen der Formel I kann in den erfindungsgemäßen Zusammensetzungen sehr klein sein, wenn nur eine deodorierende, bakteriostatische und absäuernde Nachbehandlung erwünscht ist. Meist wird aber, insbesondere im Bereich der Haushaltsweichspülmittel, auch eine weichmachende Wirkung angestrebt. In solchen Produkten wird bevorzugt eine Menge von 1 - 10 Gew.-% der wasserunlöslichen quartären Ammoniumverbindung (A) eingesetzt.

Die antibakterielle, wasserlösliche quartäre Ammoniumverbindung (B) wird üblicherweise in Mengen von 2 - 15 Gew.-% verwendet, um bei der für Wäscheweichspülmittelkonzentrate üblichen Flottenverdünnung (von 1 : 500 bis 1 : 5000) noch eine ausreichende antibakterielle Ausrüstung auf der Wäsche zu hinterlassen.

Das als Terpenverbindung (C) bevorzugte Pine-Oil wird bevorzugt in einer Menge von 0,1 - 2 Gew.-% eingesetzt. Zur Absenkung des pH-Wertes sind bevorzugt Mengen von 1 - 10 Gew.-% Ameisensäure, Glycolsäure oder Milchsäure geeignet.

Wenn als Emulgator (E) ein C₁₀-C₁₆-Alkandiol-polyglycolether mit 8-20 Glycolethergruppen eingesetzt wird, dann eignet sich zur Herstellung einer klar solubilisierten erfindungsgemäßen Zubereitung bevorzugt eine Menge von 1 - 10 Gew.-%. Die bevorzugten, wasserklar erscheinenden erfindungsgemäßen Wäscheweichspülmittel enthalten daher bevorzugt
(A) 1 - 10 Gew.-% der wasserunlöslichen quartären Ammoniumverbindung der Formel I
(B) 2 - 15 Gew.-% der wasserlöslichen quartären Ammoniumverbindung der Formel II
(C) 0,1 - 2 Gew.-% Pine-Oil als Terpenverbindung
(D) 1 - 10 Gew.-% Ameisensäure, Glycolsäure oder Milchsäure
(E) 1 - 10 Gew.-% eines C₁₀-C₁₆-Alkandiol-polyglycolethers mit 6-20 Glycolethergruppen als Emulgator.

Darüber hinaus können übliche Formulierungshilfsmittel und Additive wie z.B. wasserlösliche anorganische Salze, z.B. Mg- oder Ca-Salze, wasserlösliche Komplexbildner, wasserlösliche Verdickungsmittel, wasserlösliche kationische Polymere sowie Farbstoffe und Duftstoffe, perlglanzgebende Substanzen, Bleichmittel, Vergrauungsinhibitoren, Aufheller und Schauminhibitoren enthalten sein.

Die Herstellung der erfindungsgemäßen Wäschenachbehandlungsmittel erfolgt am einfachsten durch bloßes Vermischen der Komponenten. So kann man z.B. das Wasser auf 40 - 60°C erwärmen, die wasserlösliche quartäre Ammoniumverbindung (B), die wasserunlösliche quartäre Ammoniumverbindung (A), die Terpenverbindung (C) und den Emulgator (E) der Reihe nach zugeben und unter Rühren homogenisieren. Dabei ist Schaumbildung zu vermeiden. Nach Zusatz der Farbstoffe wird durch Kühlung eine Temperatur von 20°C eingestellt. Dann wird durch Säurezusatz (D) der pH-Wert auf 1 - 4 eingestellt.

Die folgenden Beispiele sollen den Gegenstand der vorliegenden Erfindung näher erläutern:

### Beispiele

Es wurden Zusammensetzungen gemäß Tabelle I durch Vermischen der Komponenten in den angegebenen Mengen hergestellt. Es wurden dabei die folgenden Handelsprodukte verwendet:

| | |
|---|---|
| Bardac 2270 E | Didecyl-dimethyl-ammoniumchlorid, 70 Gew.-% in Ethylenglycol |
| | |
| Stepantex D0 90 | Di-oleoyl-hydroxyethyl-methyl-ammonium-methosulfat |
| | |
| Epicol G 2, G 10 | Anlagerungsprodukt von 1 Mol Ethylenglycol und 10 Mol Ethylenoxid an ein α-C₁₂-C₁₄-Epoxyalkan |
| | |
| Genamin S 250 | Anlagerungsprodukt von 25 Mol Ethylenoxid an 1 Mol Stearylamin |

In das auf 45°C erwärmte Wasser wurden der Reihe nach Bardac 2270 E, Stepantex D0 90, Pineöl und Epicol G2 G10 unter Rühren eingemischt. Dann wurde bis zur Bildung einer homogenen und klaren Lösung gerührt. Anschließend wurde auf 20°C gekühlt und Ameisensäure zugesetzt, kurz intensiv gemischt, und dann noch 15 Minuten nachgerührt.

| Zusammensetzung | 1 | 2 | 3 | 4 | 5 | 6 |
|---|---|---|---|---|---|---|
| Bardac 2270 E | 10 | 10 | 10 | 10 | 6,5 | 6,5 |
| Stepantex DO 90 | 2,5 | 5,0 | 5,0 | 7,5 | 2,5 | 5,0 |
| Genamin S 250 | 2,5 | 2,5 | 2,5 | 2,5 | - | - |
| Epicol G 10 | 2,5 | 2,5 | 2,5 | 2,5 | 3,0 | 5,0 |
| Pine-Oil | 1,5 | 0,5 | 1,5 | 1,5 | 0,5 | 1,5 |
| Ameisensäure | 18,0 | 5,2 | 18,0 | 18,0 | 5,0 | 5,0 |
| Wasser, vollentsalzt | 63 | 74,3 | 60,5 | 58 | 69 | 63,5 |
| Viskosität (mPas) 20°C | 10 | 10 | 10 | 10 | 10 | 10 |
| Aussehen 20°C | klar | klar | klar | klar | klar | klar |
| pH-Wert | 1 | 2 | 1 | 1 | 1,5 | 1,5 |

## Patentansprüche

1. Zusammensetzung zur Nachbehandlung gewaschener Wäsche in Form einer wäßrigen Zubereitung mit einem Gehalt von
(A) 0,1 - 30 Gew.-% einer quartären Ammoniumverbindung der Formel I 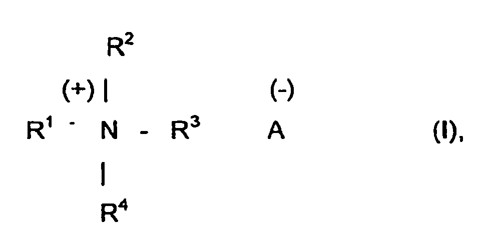 In der R¹ und R² Alkylgruppen mit 16 - 22 C-Atomen oder Gruppen der Formel R⁵CO (XCₙH₂ₙ)ₐ sind, worin R⁵CO eine lineare Acylgruppe mit 16 - 22 C-atomen, X = Sauerstoff oder - NH -, n = 2 oder 3, a = 1 bis 4, R³ eine Gruppe gemäß R¹ oder R² oder eine Alkylgruppe mit 1 - 4 C-Atomen und R⁴ eine Alkylgruppe mit 1 - 4 C-Atomen oder eine Hydroxalkylgruppe mit 2 - 4 C-Atomen und A*⁽⁻⁾* ein Halogenid- oder Methoxysulfat-Anion ist, wobei diese quartäre Ammoniumverbindung eine geringere Wasserlöslichkeit als 0,1 Gew.-% bei 20 °C aufweist,
(B) 0,1 - 50 Gew.-% einer wasserlöslichen quartären Ammoniumverbindung der Formel II 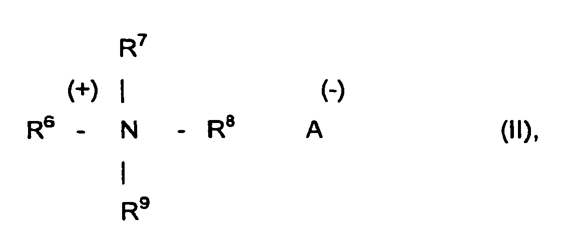 in der R⁶ und R⁷ eine Alkylgruppe mit 6 - 12 C-Atomen, R⁸ und R⁹ Alkylgrupen mit 1 - 4 C-Atomen oder Hydroxyalkylgruppen mit 2 - 4 C-Atomen und A⁽⁻⁾ ein Halogenid- oder Methoxysulfat-Anion ist, wobei diese quartäre Ammoniumverbindung eine Wasserlöslichkeit von mindestens 1 Gew.-% bei 20 °C aufweist,
(C) 0 - 5 Gew.-% einer Terpenverbindung oder eines solche Verbindungen enthaltende Holzöldestillats
(D) 0,1 - 20 Gew.-% einer wasserlöslichen anorganischen Säure oder organischen Carbonsäure oder Hydroxycarbonsäure mit 1 - 6 C-Atomen zur Einstellung eines pH-Wertes der Zubereitung von 1 bis 4, wobei der pH-Wert bei Verdünnung im Verhältnis 1 : 1000 unter 5 liegt, und
(E) 0,1 - 20 Gew.-% eines Emulgators vom Typ der Ethylenoxid-Anlagerungsprodukte mit einem HLB-Wert von 12 bis 19
enthält.

2. Zusammensetzung nach Anspruch 1, **dadurch gekennzeichnet, daß** als wasserunlösliche quartäre Ammoniumverbindung (A) eine Verbindung der Formel I enthalten ist, in der R¹ und R² Acyloxyalkylgruppen der Formel R⁵CO (OCₙH₂ₙ)ₐ - sind, worin R⁵CO eine lineare Acylgruppe mit 16 - 18 C-Atomen, n = 2 oder 3 und a = 1 - 4 ist, R³ eine Gruppe gemäß R¹ oder R² oder eine Alkylgruppe mit 1 - 4 C-Atomen und R⁴ eine Alkylgruppe mit 1 - 4 C-Atomen oder eine Hydroxyalkylgruppe mit 2 - 4 C-Atomen und A⁽⁻⁾ ein Halogenid- oder Methoxysulfat-Anion ist.

3. Zusammensetzung nach Anspruch 2, **dadurch gekennzeichnet, daß** R⁵CO eine Oleoylgruppe oder eine von einer mehr als 50 Gew.-% Ölsäure enthaltenden Talg- oder Palmöl-fettsäure abgeleitete Acylgruppe ist.

4. Zusammensetzung nach Anspruch 1 bis 3, **dadurch gekennzeichnet, daß** als wasserlösliche quartäre Ammoniumverbindung (B) eine Verbindung der Formel II enthalten ist, in der R⁶ und R⁷ Alkylgruppen mit 8 oder 10 C-Atomen sind.

5. Zusammensetzung gemäß Anspruch 1 - 4, **dadurch gekennzeichnet, daß** als Terpenverbindung (C) ein Holzöldestillat, bevorzugt Pine-Oil, enthalten ist.

6. Zusammensetzung gemäß Anspruch 1 - 5, **dadurch gekennzeichnet, daß** als wasserlösliche Säure (D) eine organische Carbonsäure mit 1 - 4 C-Atomen oder eine Hydroxycarbonsäure mit 2 - 6 C-Atomen enthalten ist.

7. Zusammensetzung gemäß Anspruch 1 - 6, **dadurch gekennzeichnet, daß** als Emulgator (E) ein Alkandiol-(1,2)-polyglycolether, hergestellt durch Anlagerung von 5 - 25 Mol Ethylenoxid an ein Addukt von Ethylenglycol an ein lineares 1,2-Epoxyalkan mit 10 -16 C-Atomen, enthalten ist.

8. Zusammensetzung nach Anspruch 1 - 7, **dadurch gekennzeichnet, daß**
(A) 1 - 10 Gew.-% der wasserunlöslichen quartären Ammoniumverbindung der Formel I
(B) 2 - 15 Gew.-% der wasserlöslichen quartären Ammoniumverbindung der Formel II
(C) 0,1 - 2 Gew.-% Pine-Oil
(D) 1 - 10 Gew.-% Ameisensäure, Glycolsäure oder Milchsäure und
(E) 1 - 10 Gew.-% eines C₁₀-C₁₆-Alkandiol-polyglycolethers mit 6 - 20 Glycolethergruppen
enthalten sind.

## Claims

1. A composition for the after-treatment of washed laundry in the form of an aqueous formulation having a content of:
(A) from 0.1 to 30% by weight of a quaternary ammonium compound of formula I 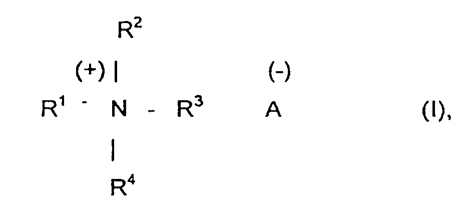 wherein R¹ and R² are alkyl groups having from 16 to 22 carbon atoms or groups of formula R⁵CO(XCₙH₂ₙ)ₐ, wherein R⁵CO is a linear acyl group having from 16 to 22 carbon atoms, X is oxygen or -NH-, n = 2 or 3, a = 1 to 4, R³ is a group according to R¹ or R² or an alkyl group having from 1 to 4 carbon atoms, and R⁴ is an alkyl group having from 1 to 4 carbon atoms or a hydroxyalkyl group having from 2 to 4 carbon atoms, and A⁽⁻⁾ is a halide or methoxysulfate anion, this quaternary ammonium compound having a water solubility of lower than 0.1% by weight at 20 °C;
(B) from 0.1 to 50% by weight of a water-soluble quaternary ammonium compound of formula II 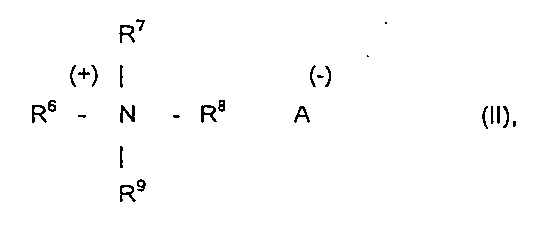 wherein R⁶ and R⁷ are alkyl groups having from 6 to 12 carbon atoms, R⁸ and R⁹ are alkyl groups having from 1 to 4 carbon atoms or hydroxyalkyl groups having from 2 to 4 carbon atoms, and A⁽⁻⁾ is a halide or methoxysulfate anion, this quaternary ammonium compound having a water solubility of at least 1% by weight at 20 °C;
(C) from 0 to 5% by weight of a terpene compound or a wood oil distillate containing such compounds;
(D) from 0.1 to 20% by weight of a water-soluble inorganic acid or organic carboxylic acid or hydroxycarboxylic acid having from 1 to 6 carbon atoms for adjusting the pH of the formulation to from 1 to 4, the pH being less than 5 when diluted at a ratio of 1 : 1000; and
(E) from 0.1 to 20% by weight of an emulsifier of the ethylene oxide addition products type having an HLB value of from 12 to 19.

2. The composition according to claim 1, **characterized by** containing as said water-insoluble quaternary ammonium compound (A) a compound of formula I in which R¹ and R² are acyloxyalkyl groups of formula R⁵CO(OCₙH₂ₙ)ₐ, wherein R⁵CO is a linear acyl group having from 16 to 18 carbon atoms, n = 2 or 3, and a = 1 to 4, R³ is a group according to R¹ or R² or an alkyl group having from 1 to 4 carbon atoms, and R⁴ is an alkyl group having from 1 to 4 carbon atoms or a hydroxyalkyl group having from 2 to 4 carbon atoms, and A⁽⁻⁾ is a halide or methoxysulfate anion.

3. The composition according to claim 2, **characterized in that** R⁵CO is an oleoyl group or an acyl group derived from a tallow or palm oil fatty acid containing more than 50% by weight of oleic acid.

4. The composition according to claim 1 to 3, **characterized by** containing as said water-soluble quaternary ammonium compound (B) a compound of formula II in which R⁶ and R⁷ are alkyl groups having 8 or 10 carbon atoms.

5. The composition according to claim 1 to 4, **characterized by** containing a wood oil distillate, preferably pine oil, as said terpene compound (C).

6. The composition according to claim 1 to 5, **characterized by** containing an organic carboxylic acid having from 1 to 4 carbon atoms or a hydroxycarboxylic acid having from 2 to 6 carbon atoms as said water-soluble acid (D).

7. The composition according to claim 1 to 6, **characterized by** containing a 1,2-alkanediol polyglycol ether prepared by adding from 5 to 25 moles of ethylene oxide to an adduct of ethylene glycol to a linear 1,2-epoxyalkane having from 10 to 16 carbon atoms as said emulsifier (E).

8. The composition according to claim 1 to 7, **characterized by** containing:
(A) from 1 to 10% by weight of said water-insoluble quaternary ammonium compound of formula I;
(B) from 2 to 15% by weight of said water-soluble quaternary ammonium compound of formula II;
(C) from 0.1 to 2% by weight of pine oil;
(D) from 1 to 10% by weight of formic acid, glycolic acid or lactic acid; and
(E) from 1 to 10% by weight of a C₁₀-C₁₆ alkanediol polyglycol ether having from 6 to 20 glycol ether groups.

## Revendications

1. Composition pour le retraitement des articles textiles lavés sous forme d'une préparation aqueuse contenant :
A) 0,1 à 30 % en poids d'un composé d'ammonium quaternaire de formule I 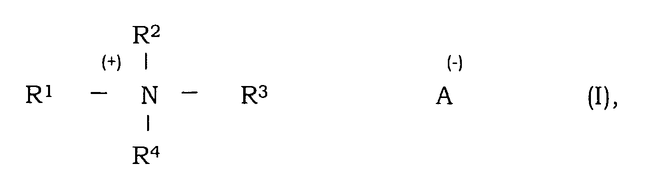 dans laquelle R¹ et R² sont des groupes alkyle ayant de 16 à 22 atomes de carbone ou des groupes de formule R⁵CO (XCₙH₂ₙ)ₐ dans laquelle R⁵CO est un groupe acyle linéaire ayant de 16 à 22 atomes de carbone, X est de l'oxygène ou -NH -, n = 2 ou 3, a est = 1 à 4 et R³ est un groupe selon R¹ ou R² est un groupe alkyle ayant de 1 à 4 atomes de carbone et R⁴ est un groupe alkyle ayant de 1 à 4 atomes de carbone ou un groupe hydroxyalkyle ayant de 2 à 4 atomes de carbone et A⁽⁻⁾ est un anion halogénure ou méthoxysulfate étant précisé que ce composé d'ammonium quaternaire possède une solubilité dans l'eau plus faible que 0,1 % en poids à 20 °C
B) de 0,1 à 50 % en poids d'un composé d'ammonium quaternaire soluble dans l'eau de formule II 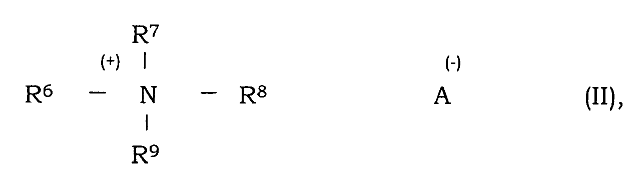 dans laquelle R⁶ et R⁷ sont un groupe alkyle ayant de 6 à 12 atomes de carbone, R⁸ et R⁹ sont des groupes alkyle ayant de 1 à 4 atomes de carbone ou des groupes hydroxyalkyle ayant de 2 à 4 atomes de carbone et A⁽⁻⁾ est un anion halogénure ou méthoxysulfate, étant précisé que ce composé d'ammonium quaternaire possède une solubilité dans l'eau d'au moins 1 % en poids à 20 °C.
C) de 0 à 5 % en poids d'un composé terpénique ou un distillat d'essence de bois contenant un tel composé.
D) de 0,1 à 20 % en poids d'un acide minéral soluble dans l'eau ou d'acides carboxyliques organiques ou d'acides hydroxycarboxyliques ayant de 1 à 6 atomes de carbone pour l'ajustement d'une valeur de pH de la préparation allant de 1 à 4 étant précisé que le pH est inférieur à 5 en cas de dilution dans un rapport 1 :1000 et,
E) de 0,1 à 20 % en poids d'un agent émulsionnant du type des produits d'addition de l'oxyde de d'éthylène, ayant une valeur HLB de 12 à 19.

2. Composition selon la revendication 1,
**caractérisée en ce que**
comme composé d'ammonium quaternaire insoluble dean l'eau (A), un composé de formule (I) est contenu dans lequel R¹ et R² sont des groupes acyloxyalkyle de formule :
R⁵CO (OCₙH₂ₙ)ₐ
dans laquelle R⁵CO est un groupe acyle linéaire ayant de 16 à 18 atomes de carbone, n est = à 2 ou 3, et a est égal à 1 à 4, R³ est un groupe selon R¹ et R² ou un groupe alkyle ayant de 1 à 4 atomes de carbone et R⁴ est un groupe alkyle ayant de 1 à 4 atomes de carbone ou un groupe hydroxyalkyle ayant de 2 à 4 atomes de carbone et A⁽⁻⁾ est un anion halogénure ou méthoxysulfate.

3. Composition selon la revendication 2,
**caractérisée en ce que**
R⁵CO est un groupe oléoyle ou un groupe acyle dérivé d'acides gras de suif ou d'huile de palme contenant plus de 50% en poids de l'acide oléique.

4. Composition selon la revendication 1 à 3,
**caractérisée en ce qu'**
elle contient comme composé d'ammonium quaternaire soluble dans l'eau (B) un composé de formule (II) dans lequel R⁶ et R7, sont des groupes alkyle ayant 8 ou 10 atomes de carbone.

5. Composition selon la revendication 1 - 4,
**caractérisée en ce que**
comme composé terpénique, un distillat d'essence de bois de préférence de l'essence de pin est contenu.

6. Composition selon la revendication 1 - 5,
**caractérisée en ce qu'**
elle contient comme acide soluble dans l'eau (D), un acide carboxylique organique ayant de 1 à 4 atomes de carbone ou un acide hydroxycarboxylique ayant de 2 à 6 atomes de carbone.

7. Composition selon la revendication 1 - 6,
**caractérisée en ce qu'**
elle contient comme agent émulsionnant (E), un polyglycoléther d'alcanediol (1,2) produit par addition de 5 à 25 moles d'oxyde d'éthylène sur un produit d'addition de l'éthylèneglycol sur un 1,2-époxyalcane linéaire ayant de 10 à 16 atomes de carbone.

8. Composition selon la revendication 1 - 7,
**caractérisée en ce qu'**elle contient
A) de 1 à 10 % en poids de composé d'ammonium quaternaire insoluble dans l'eau de formule I,
B) de 2 à 15 % en poids de composé d'ammonium quaternaire soluble dans l'eau de formule II,
C) de 0,1 à 2 % en poids de Pine-Oil (essence de pin),
D) de 1 à 10 % en poids d'acide formique, d'acide glycolique ou d'acide lactique et,
E) de 1 à 10 % en poids d'un polyglycoléther d'[alcane en C₁₀-C₁₆-]diol, avec 6 à 20 groupes éther de glycol.
